# FASCICULE DE BREVET EUROPEEN

(11) **EP 2 190 656 B1**
(45) Date de publication et mention de la délivrance du brevet: **22.06.2011**
(21) Numéro de dépôt: 08803479.8
(22) Date de dépôt: 01.09.2008
(51) Int. Cl.: B29D 30/12, B29D 30/24, B29C 33/48

(54) **NOYAU RIGIDE DEMONTABLE POUR LA FABRICATION DE PNEUMATIQUES COMPORTANT DES LEVRES RAYONNEES**
DEMONTIERBARER HARTKERN ZUR HERSTELLUNG VON REIFEN MIT ABGERUNDETEN LIPPEN
DEMOUNTABLE RIGID CORE FOR THE MANUFACTURE OF TYRES COMPRISING RADIUSED LIPS

(30) Priorité: 06.09.2007 FR 0706291
(43) Date de publication de la demande: 02.06.2010
(73) Titulaire: Société de Technologie MICHELIN, 63000 Clermont-Ferrand (FR); MICHELIN Recherche et Technique S.A., 1763 Granges-Paccot (CH)
(72) Inventeur: DOS SANTOS, Carlos-Manuel, F-63000 Clermont-Ferrand (FR); BEAUGRAND, Sébastien, F-63370 Lempdes (FR)
(74) Mandataire: Reynaud, Georges
(86) Numéro de dépôt international: PCT/EP2008/061498
(87) Numéro de publication internationale: WO 2009/030667

(56) Documents cités:
- EP-A- 0 242 840
- EP-A- 0 478 271
- EP-A- 0 825 014
- EP-A- 1 612 033
- US-A- 1 328 676
- US-A- 1 392 347
- US-A- 3 932 256

## Description

L'invention concerne le domaine de la fabrication des pneumatiques. Plus particulièrement l'invention s'intéresse au domaine de l'assemblage dans lequel on utilise un noyau sensiblement rigide comme support de fabrication du pneumatique et comme moyen de moulage de la surface de la cavité intérieure dudit pneumatique. La forme du noyau, d'allure sensiblement toroïdale, épouse donc la forme de la cavité intérieure du pneumatique.

La publication EP 1 075 928 décrit un noyau rigide du type de ceux concernés par l'invention, et qui sert comme support d'une ébauche de pneumatique du début à la fin de sa fabrication. Ce noyau est constitué de plusieurs fractions, indépendantes les unes des autres, afin de pouvoir être extrait par fractions de l'intérieur d'un pneumatique par l'espace disponible compris à l'intérieur des bourrelets. Ce noyau est ensuite reconstitué pour servir de support pour la fabrication ultérieure d'un autre pneumatique. Un moyen permet de tenir les fractions assemblées pendant la fabrication du pneumatique. D'autres publications plus anciennes décrivent également des noyaux du même type telle que la publication US 1 392 347, ou US 1 328, 676 ou bien encore, plus récemment, la publication EP 242 840.

Un tel noyau doit résister à de nombreux cycles de montage et de démontage et doit être d'une très grande robustesse afin de garantir un haut niveau de qualité géométrique ainsi qu'une grande pérennité de ces qualités malgré les nombreuses manipulations dont il est l'objet. De plus, ce noyau, lorsqu'il est employé comme moyen de moulage de la partie interne du pneumatique, doit supporter des forces de compression importantes. Sa structure mécanique est donc adaptée pour ce type d'usage ce qui le distingue notamment des supports traditionnels utilisés pour la fabrication des pneumatiques tels que décrits par exemple dans la publication US 3 932 256.

De manière générale, le noyau comporte une pluralité de fractions adjacentes circonférentiellement, disposées cote à cote en contact les unes contre les autres par leurs faces transversales. Les faces transversales d'au moins une fraction sont convergentes à l'extérieur du noyau, afin de permettre le démontage dudit noyau en enlevant cette fraction radialement par l'intérieur. En pratique le noyau comporte deux modèles de fractions. Des fractions divergentes dont les faces transversales sont divergentes radialement à l'extérieur du noyau, et des fractions dites inversées dont les faces transversales sont convergentes à l'extérieur du noyau.

Une fois assemblée, la surface externe du noyau constitue la surface de réception dont la forme est sensiblement toroïdale, et sur laquelle les produits profilés de nature caoutchoutique sont déposés afin de constituer l'ébauche du pneumatique.

Il est connu par ailleurs de déposer ces produits caoutchoutiques sous forme de bandelettes enroulées circonférentiellement en spirale autour de la forme. Le profil transversal des bandelettes et le pas de la spirale définissent, de manière connue, la section transversale du produit que l'on souhaite déposer à un endroit précis de l'ébauche de pneumatique.

Ainsi, en règle générale le premier produit déposé sur la forme définit la surface intérieure du pneumatique. Il est constitué par un enroulement de bandelettes jointives dont le matériau, une fois la vulcanisation achevée, est sensiblement imperméable à l'air.

La pose par enroulement de la bandelette de gomme intérieure est effectuée par un moyen apte à délivrer la bandelette soit directement sur la surface de la forme à l'aide d'une buse par exemple, soit depuis un poste d'extrusion, de sorte que les bandelettes sont déposées à chaud avant d'avoir subit une phase de refroidissement conséquente. Il s'en suit que le produit est plus sensible aux déformations qu'un produit plus froid et plus rigide. Dans les deux cas, la bandelette est déposée directement sur la surface de la forme de réception soit par la buse d'extrusion soit à l'aide d'un moyen d'applique tel qu'une roulette.

Quelque soit le moyen utilisé il a été observé que la bandelette déposée en premier sur la forme, c'est-à-dire la bandelette en contact direct avec la forme, était susceptible de se rompre de manière inopinée. Ces ruptures aléatoires de la bande ont des conséquences fâcheuses, en ce qu'elles provoquent l'interruption du cycle d'enroulage et des pertes de temps substantielles pour reconfigurer le poste, en particulier lorsque le cycle de pose est piloté par des moyens automatiques.

L'invention a pour objet de réduire fortement la fréquence des incidents de fabrication.

Il a été observé que ces ruptures de bande se produisaient le plus souvent à la jonction entre deux fractions de la forme. Une analyse plus fine a montré que, à cet endroit particulier, les deux fractions de forme étaient décalées radialement l'une par rapport l'autre. Ceci s'explique par la multiplication des cycles de montage et de démontage et par les usures localisées qui se produisent sur les faces transversales des fractions ainsi que sur les moyens d'accrochage des fractions sur la jante. Pour maîtriser l'apparition de ce phénomène, il s'en suit une série d'opérations de maintenance et de réglage longues et coûteuses, ayant pour objet de faire en sorte que la surface extérieure de la forme, une fois assemblée, ne présente plus de décalages radiaux au niveau des joints entre les formes.

Ces opérations de réglage peuvent devenir de plus en plus fréquentes en fonction du vieillissement de la forme, et il n'est pas toujours possible de s'affranchir totalement de ce phénomène qui peut même apparaître au moment de l'assemblage de la forme de manière irrégulière au sein d'une série d'assemblages considérés comme « conformes ».

Selon l'invention, il a été mis en évidence qu'il était possible de réduire fortement l'influence de ces décalages sur la pose du premier produit sur la forme, en s'arrangeant pour que l'arête formée par l'intersection de la face transversale et de la surface de réception d'une fraction comporte un léger rayonnage sur tout ou partie de la sa longueur. En pratique il a été déterminé que la valeur dudit rayon doit être comprise entre 0,8 et 1,5 mm et, préférentiellement, être sensiblement égale à 1mm.

De manière plus générale, le problème technique résolu par l'invention se pose de façon identique pour l'ensemble des moyens destinés à recevoir une première couche formée par l'enroulement d'une bande de matériau caoutchoutique. Ces moyens sont constitués par un assemblage d'une pluralité de fractions adjacentes circonférentiellement, disposées cote à cote en contact les unes contre les autres en appui par leurs faces transversales. Ces fractions définissent en règle générale, une fois assemblées, une surface de réception ayant une forme torique. Toutefois, sans se départir de l'esprit de l'invention, ces fractions peuvent également avoir une forme cylindrique.

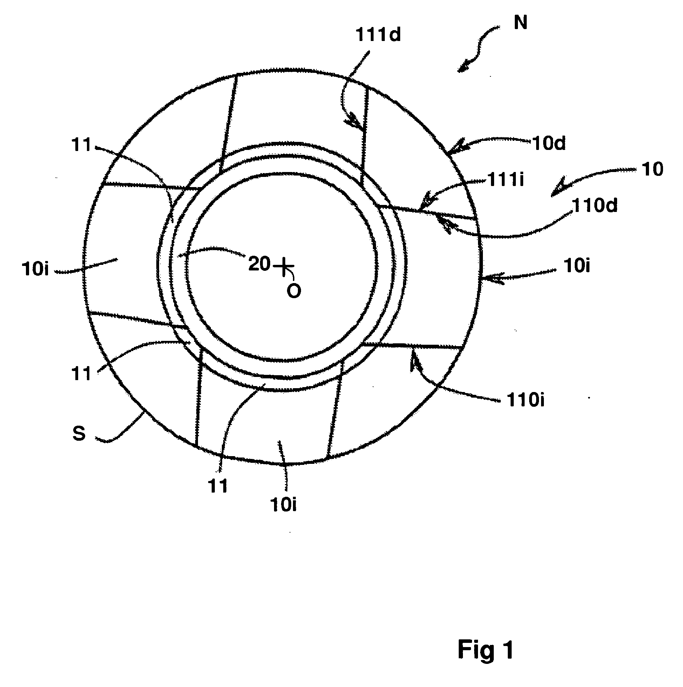

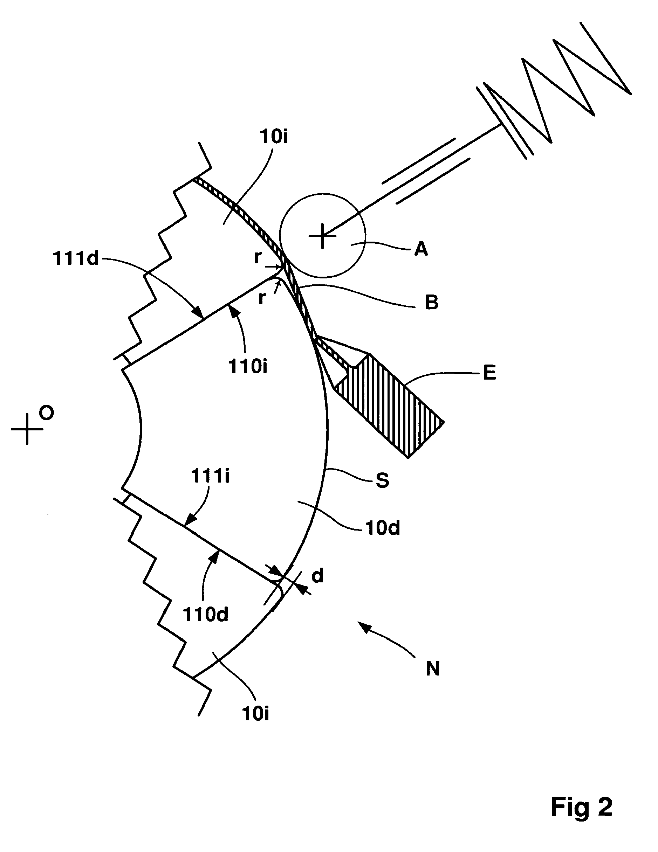

La description qui suit, s'appuie sur le mode le plus courant de mise en oeuvre de l'invention, à savoir une forme toroïdale, et sur les figures 1 et 2, dans lesquelles :
- la figure 1 représente une vue d'un noyau dans un plan perpendiculaire à l'axe du noyau,
- la figure 2 représente une vue rapprochée de la surface de réception au niveau du joint formé par deux faces transversale.

La figure 1 représente un noyau N dans une vue dans le plan perpendiculaire à l'axe de rotation du noyau. Ledit noyau comporte des fractions 10 se décomposant en fractions divergentes 10d et en fractions inversées 10i. Les faces transversales de la fraction divergente 10d respectivement 110d et 111d sont divergentes vers l'extérieur du noyau. Les faces transversales de la fraction inversée 10i, respectivement 110i et 111i sont convergentes vers l'extérieur du noyau N.

Lorsque le noyau est monté, la face transversale 110d d'une fraction divergente 10d, s'ajuste précisément contre la face transversale 111i de la fraction inversée 10i contre laquelle elle est juxtaposée.

Des moyens d'accrochage 11, sont solidaires de chacune des fractions 10, et permettent de fixer lesdites fractions sur une jante 20, de manière à maintenir les fractions 10 en position pendant toute la phase de réalisation du pneumatique. La surface externe du noyau forme la surface de réception S sur laquelle vont être déposés directement par enroulement les produits d'assemblage destinés à former l'ébauche de pneumatique.

La figure 2 représente une vue portion du noyau N dans un plan perpendiculaire à son axe de rotation O.

Un moyen d'extrusion, E dépose une bandelette B de matériau caoutchoutique directement sur la surface S du noyau N, lorsque la surface de réception S est mise en mouvement relatif par rapport au moyen d'extrusion E. La bandelette est formée à partir d'un matériau caoutchoutique étanche à l'air, et a une épaisseur comprise entre 0,5 mm et 1 mm. La température d'extrusion est comprise entre 65°C et 95°C. Un moyen d'applique A est prévu pour faire adhérer la bandelette sur la surface S du noyau N.

On observe, sur la figure 2 le décalage radial d entre une fraction divergente10d et une fraction inversée 10i. Lorsque ce décalage devient trop important on observe les phénomènes de rupture de bande décrits ci-dessus. En pratique, ce décalage peut être compris entre 0,1 mm et 2 mm sans que cela affecte les performances du produit final.

Selon l'invention, pour s'affranchir de ce problème, et pour une portion 10d, les arêtes formées par l'intersection des faces transversales 110i et 111i, avec la surface de réception S, ont un rayon r. De même pour la portion 10i le rayon de raccordement entre la surface S et la face transversale 111d ou entre la surface S et la face transversale 110d est également égal à r.

Ce rayon de raccordement est compris entre 0,8 mm et 1,5 mm, et de préférence sensiblement égal à 1mm. Le rayon de raccordement doit être suffisamment élevé pour réduire l'effet de sectionnement engendré par l'arête formée par l'intersection entre la surface de réception et la face transversale, mais rester dans des limites étroites pour ne par être à l'origine de problèmes connexes tels que la formation d'empreintes non désirées sur la surface intérieure du pneumatique.

Le rayonnage peut être fait sur tout ou partie de l'arête définie par l'intersection des faces transversales et de la surface de réception. En pratique le rayonnage est interrompu 10 mm au-dessus de la zone basse et correspondant à la zone de pose de la bandelette radialement le plus proche du centre de l'axe de rotation de la surface de réception.

Le choix du rayon de raccordement r est lié à l'ampleur du décalage d moyen observé. Plus ce décalage est élevé, plus le rayon r sera élevé. Toutefois, il convient de noter ici que des décalages d trop importants, en pratique supérieurs à 2 mm, sont susceptibles de provoquer d'autres anomalies de forme dans la réalisation du pneumatique final. Aussi, une intervention s'avère alors nécessaire pour régler à nouveau les portions du noyau les unes par rapport aux autres, afin de replacer ce décalage dans les tolérances acceptables.

La solution proposée permet donc d'éviter la rupture de bande pendant la pose de la gomme formant la surface intérieure du pneumatique, tout en autorisant un léger décalage radial entre les portions formant la surface de réception.

## Revendications

1. Noyau (N) définissant au moins partiellement une forme de fabrication dont la surface (S) de réception d'allure toroïdale, est destinée à recevoir directement par enroulement des profilés (B) sous forme de bandelettes jointives et formant la surface intérieure d'un pneumatique, comportant une pluralité de fractions (10, 10d, 10i) ayant chacune des faces transversales (110d, 111d, 110i, 111i) lesdites fractions étant adjacentes circonférentiellement et disposées côte à côte en appui les unes contre les autres par l'intermédiaire de leurs faces transversales, **caractérisé en ce que**, le rayon de raccordement (r) entre la face transversale et la surface de réception (S) d'une fraction (10d, 10i) est compris entre 0,8 mm et 1,5 mm, sur tout ou partie de la longueur de l'arête formée par l'intersection de ces deux surfaces.

2. Noyau selon la revendication 1, dans lequel ledit rayon de raccordement (r) est égal à 1 mm.

3. Noyau selon la revendication 1 ou 2, dans lequel les faces transversales (110i, 111 i) d'au moins une fractions (10i) sont convergentes radialement vers l'extérieur du noyau.

4. Noyau selon l'unes des revendications 1 à 3, destiné à servir de moyen de moulage de la surface intérieure du pneumatique.

## Claims

1. Core (N) defining at least partially a manufacturing form whose receiving surface (S), which is of toroidal appearance, is designed to receive directly, by winding, profiled elements (B) in the form of contiguous bands forming the inside surface of a tyre, comprising a plurality of segments (10, 10d, 10i), each having transverse faces (110d, 111d, 110i, 111i), said segments being circumferentially adjacent and arranged side by side, bearing against each other via their transverse faces, which core is **characterized in that** the connecting radius (r) between the transverse face and the receiving surface (S) of a segment (10d, 10i) is between 0.8 mm and 1.5 mm, along all or part of the length of the edge formed by the intersection of these two surfaces.

2. Core according to Claim 1, in which said connecting radius (r) is equal to 1 mm.

3. Core according to Claim 1 or 2, in which the transverse faces (110i, 111i) of at least one segment (10i) are convergent radially outwards from the core.

4. Core according to one of Claims 1 to 3, designed to serve as a means for moulding the inside surface of the tyre.

## Patentansprüche

1. Kern (N), der zumindest teilweise eine Herstellungsform definiert, deren Aufnahmefläche (S) von ringförmigem Aussehen dazu bestimmt ist, direkt durch Aufwickeln Profilteile (B) aufzunehmen, die die Form von aneinandergrenzenden Streifen haben und die Innenfläche eines Luftreifens bilden, der mehrere Abschnitte (10, 10d, 10i) aufweist, die je Querseiten (110d, 111d, 110i, 111i) haben, wobei die Abschnitte in Umfangsrichtung aneinander angrenzen und über ihre Querseiten gegeneinander anliegend nebeneinander angeordnet sind, **dadurch gekennzeichnet, dass** der Anschlussradius (r) zwischen der Querseite und der Aufnahmefläche (S) eines Abschnitts (10d, 10i) über die ganze oder einen Teil der Kante, die von der Schnittlinie dieser zwei Flächen gebildet wird, zwischen 0,8 mm und 1,5 mm beträgt.

2. Kern nach Anspruch 1, bei dem der Anschlussradius (r) gleich 1 mm ist.

3. Kern nach Anspruch 1 oder 2, bei dem die Querseiten (110i, 111i) mindestens eines Abschnitts (10i) radial nach außerhalb des Kerns konvergieren.

4. Kern nach einem der Ansprüche 1 bis 3, der dazu bestimmt ist, als Formgebungseinrichtung der Innenfläche des Luftreifens zu dienen.
